# EUROPEAN PATENT APPLICATION

(11) **EP 4 009 642 A1**
(43) Date of publication of application: **08.06.2022**
(21) Application number: 20924721.2
(22) Date of filing: 20.11.2020
(51) Int. Cl.: H04N 21/2187, H04N 21/258, H04N 21/439

(54) **DATA PLAYBACK METHOD AND APPARATUS**

(30) Priority: 09.03.2020 CN 202010158998
(71) Applicant: Beijing Dajia Internet Information Technology Co., Ltd., Beijing 100085 (CN)
(72) Inventor: XIONG, Bingyang, Beijing 100085 (CN)
(74) Representative: Vossius & Partner Patentanwälte Rechtsanwälte mbB
(86) International application number: PCT/CN2020/130560
(87) International publication number: WO 2021/179674

(57) **Abstract**

The present invention relates to a data playback method and apparatus, and an electronic device and a storage medium, applied to a first terminal. The method comprises: obtaining video stream data of a target video according to a data receiving service corresponding to a data receiving identity, and obtaining live streaming data, the data receiving identity being used for receiving the identity of the first terminal receiving data, the live streaming data being an audio and video data stream provided by a second terminal, and the second terminal being a terminal located in the same virtual space as the first terminal; and playing the video stream data of the target video and the live streaming data. In embodiments of the present invention, the video stream data and the live streaming data are respectively obtained and played according to the data receiving service corresponding to the data receiving identity of the first terminal, and flexible processing is performed based on the actual state of the terminal, thereby improving the live broadcasting effect and the live broadcasting efficiency.

## Description

### CROSS-REFERENCE TO RELATED APPLICATION

The present disclosure claims priority to Chinese Patent Application with the application number 202010158998.3, titled "method, apparatus, electronic device and storage medium for playing data", and filed March 9, 2020, the entire contents of which are incorporated herein by reference.

### TECHNICAL FIELD

The present disclosure relates to the field of live broadcast technology, and in particular, to a method, apparatus, electronic device, and storage medium for playing data.

### BACKGROUND

With the development of Internet technology and people's massive demand for cultural and artistic works, the live broadcast industry has ushered in unprecedented prosperity with its timeliness and interactivity of information transmission. Among them, the theater form of live broadcast plus watching drama brings a different experience to users. By transferring watching movies, TV, short videos, etc. from offline to online, it is allowed that the audiences and the anchor watch dramas and communicate at the same time.

In related art, to realize that the audiences and the anchor watch dramas and communicate at the same time, the anchor provides a live room for the audiences to participate in watching dramas. The process includes: the anchor opening a theater live room, selecting and playing a target video, during the process of playing the target video, the terminal in the live broadcast room can only obtain live broadcast data in a fixed manner, and cannot flexibly process with respect to the actual state of the terminal, and the live broadcast effect is poor.

### SUMMARY

The present disclosure provides a method, apparatus, electronic device and storage medium for playing data. The technical solutions of the present disclosure are as follows.

According to a first aspect of the embodiments of the present disclosure, there is provided a method for playing data applied to a first terminal, including:
obtaining video stream data of a target video according to a data receiving service corresponding to a data receiving identity; and obtaining live stream data; wherein the data receiving identity is an identity for the first terminal to receive data, the live stream data is an audio and video data stream provided by a second terminal, and the second terminal is a terminal in a same virtual space as the first terminal; and
playing the video stream data of the target video and the live stream data.

According to a second aspect of the embodiments of the present disclosure, there is provided a method for playing data applied to a second terminal, including:
playing video stream data of a target video shared in a virtual space;
obtaining live stream data; wherein the live stream data is an audio and video data stream provided by the second terminal; and
providing the live stream data to a first terminal, wherein the first terminal is a terminal in a same virtual space as the second terminal.

According to a third aspect of the embodiments of the present disclosure, there is provided an apparatus for playing data applied to a first terminal, including:
a data obtaining unit, configured to obtain video stream data of a target video according to a data receiving service corresponding to a data receiving identity; and obtain live stream data; wherein the data receiving identity is an identity for the first terminal to receive data, the live stream data is an audio and video data stream provided by a second terminal, and the second terminal is a terminal in a same virtual space as the first terminal; and
a data playing unit, configured to play the video stream data of the target video and the live stream data.

According to a fourth aspect of the embodiments of the present disclosure, there is provided an apparatus for playing data applied to a second terminal, including:
a video playing unit, configured to play video stream data of a target video shared in a virtual space;
a live stream data obtaining unit, configured to obtain live stream data; wherein the live stream data is an audio and video data stream provided by the second terminal; and
a live stream data providing unit, configured to provide the live stream data to a first terminal, wherein the first terminal is a terminal in a same virtual space as the second terminal.

According to a fifth aspect of the embodiments of the present disclosure, there is provided an electronic device, including:
a processor; and
a memory for storing instructions executable by the processor;
wherein the processor is configured to execute the instructions to implement the method for playing data described in any one of the embodiments of the first aspect or the second aspect.

According to a sixth aspect of the embodiments of the present disclosure, there is provided a storage medium. When instructions in the storage medium are executed by a processor of an electronic device, the electronic device is enabled to execute the method for playing data described in any one of the embodiments of the first aspect or the second aspect.

According to a seventh aspect of the embodiments of the present disclosure, there is provided a computer program product, the program product includes a computer program, the computer program is stored in a readable storage medium, and at least one processor of a device reads and executes the computer program from the readable storage medium, so that the device executes the method for playing data described in any one of the embodiments of the first aspect or the second aspect.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure, together with the description, serve to explain the principles of the present disclosure, and do not constitute an improper limitation of the present disclosure.
Fig. 1 is a diagram showing an application environment of a method for playing data according to an exemplary embodiment;
Fig. 2 is a flow chart showing a method for playing data according to an exemplary embodiment;
Fig. 3 is a flowchart showing another method for playing data according to an exemplary embodiment;
Fig. 4 is a schematic diagram showing a process of receiving data from a guest terminal according to an exemplary embodiment;
Fig. 5 is a schematic diagram showing a process of receiving data from an audience terminal according to an exemplary embodiment;
Fig. 6 is a block diagram showing an apparatus for playing data according to an exemplary embodiment;
Fig. 7 is a block diagram showing an apparatus for playing data according to an exemplary embodiment; and
Fig. 8 is an internal structure diagram of an electronic device according to an exemplary embodiment.

### DETAILED DESCRIPTION

In order to enable those of ordinary skill in the art to better understand the technical solutions of the present disclosure, the technical solutions in the embodiments of the present disclosure will be described clearly and completely in conjunction with the accompanying drawings.

It should be noted that the terms "first" and "second" in the specification, claims and the above-mentioned drawings of the present disclosure are used to distinguish similar objects, and not necessarily used to describe a specific sequence or chronological order. It should be understood that the data used in this way can be interchanged under appropriate circumstances so that the embodiments of the present disclosure described herein can be implemented in an order other than those illustrated or described herein. The implementation manners described in the following exemplary embodiments do not represent all implementation manners consistent with the present disclosure. On the contrary, they are merely examples of apparatuses and methods consistent with some aspects of the present disclosure as detailed in the appended claims.

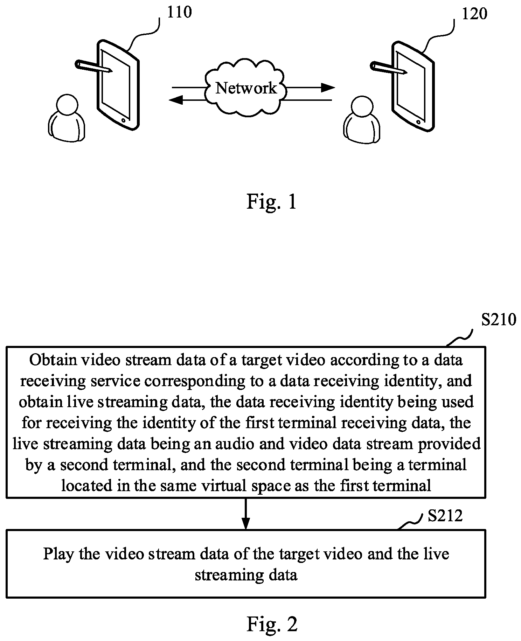

The method for playing data provided by the present disclosure may be applied to the application environment as shown in Fig. 1, in which a first terminal 110 and a second terminal 120 are involved. The first terminal 110 communicates with the second terminal 120 through the network. The first terminal 110 obtains video stream data of a target video according to a data receiving service corresponding to a data receiving identity; and obtains live stream data, where the data receiving identity is used for an identity of the first terminal 110 to receive the data, the live stream data is an audio and video data stream provided by the second terminal 120, the second terminal 120 is a terminal in the same virtual space as the first terminal 110, and the first terminal 110 plays the video stream data of the target video and the live stream data. The first terminal 110 and the second terminal 120 may be, but are not limited to, various personal computers, notebook computers, smart phones, tablet computers, and the like.

Fig. 2 is a flow chart showing a method for playing data according to an exemplary embodiment. As shown in Fig. 2, description is given by taking the data synchronization method being used in the first terminal 110 in Fig. 2 as an example, the method is applied to the first terminal, and includes the following steps.

In step 210, video stream data of a target video is obtained according to a data receiving service corresponding to a data receiving identity; and, live stream data is obtained; where the data receiving identity is used for an identity of the first terminal for receiving data, the live stream data is an audio and video data stream provided by a second terminal, and the second terminal is a terminal in the same virtual space as the first terminal.

The virtual space refers to a bounded space in the virtual network, such as a live broadcast room, a chat room, and so on. The anchor may choose to open the virtual space through an anchor terminal and select a target video. The terminal(s) in the virtual space may play the same target video synchronously. When the target video is played, the anchor and the audience may have real-time live broadcast communication. The virtual space may include a first terminal and a second terminal. The first terminal may refer to an audience terminal of the audience or a guest terminal of the guest, and the second terminal may refer to the anchor terminal of the anchor.

The data receiving identity refers to an identity of each user participating in the live broadcast or the terminal corresponding to the user during the live broadcast. The data receiving identity includes audiences and guests. Among them, different data receiving identities may be converted to each other, for example, during the live broadcast, when the audience watching the target video turns on the microphone to speak, his/her data receiving identity is changed from the audience to the guest. When he/she finishes speaking, turns off the microphone and watches the target video, his/her data receiving identity is changed from the guest to the audience.

During the live broadcast process, the first terminal may obtain the video stream data of the target video to watch the target video together with the terminal(s) in the same virtual space. In this process, the first terminal may also receive the live stream data of the second terminal. In some embodiments, the live stream data is live stream data provided by a terminal in the same virtual space as the first terminal, such as the anchor terminal, where the live stream data includes audio and video data streams, that is, includes both voice stream data and the video picture stream data.

In the embodiments of the present disclosure, the data receiving service refers to the service technology used in the process of data transmission and processing. When the first terminal obtains the video stream data of the target video and the live stream data, it may obtain the video stream data of the target video and obtain the live stream data by using the corresponding data receiving service according to its current data receiving identity.

In step 212, the video stream data of the target video and the live stream data are played.

After obtaining the video stream data of the target video and the live stream data, they may be played on the first terminal to realize drama watching and live broadcast communication.

In the above method for playing data, the first terminal obtains the video stream data of the target video according to the data receiving service corresponding to the data receiving identity; and, obtains the live stream data, where the data receiving identity is used for the identity of the first terminal to receive the data, and the live stream data is an audio and video data stream provided by the second terminal, the second terminal is a terminal in the same virtual space as the first terminal, and the first terminal plays the video stream data of the target video and the live stream data. In the embodiments of the present disclosure, flexible processing is performed based on the actual state of the terminal, thereby improving the live broadcast effect and live broadcast efficiency.

In an exemplary embodiment, before step 210, that is, before obtaining the video stream data of the target video according to the data receiving service corresponding to the data receiving identity; and obtaining the live stream data, the method further includes:
obtaining the data receiving identity; and
starting the data receiving service corresponding to the data receiving identity.

The data receiving identity includes a first data receiving identity and a second data receiving identity; the data receiving service includes a first data receiving service and a second data receiving service; the first data receiving identity corresponds to the first data receiving service, and the second data receiving identity corresponds to the second data receiving service.

In some embodiments, the first data receiving identity may be a guest, and the second data receiving identity may be an audience. Both the guest and the audience can use the first data receiving service, or the second data receiving service. Alternatively, the guest may use the first data receiving service correspondingly, and the audience uses the second data receiving service correspondingly. The data receiving service may be adjusted according to the actual situation, which is not limited by the embodiments of the present disclosure.

In some embodiments, the first data receiving service may be High Performance Play Module (HPPM) service and Audio Process Module (APM) service. The HPPM service may start the first player to obtain the video stream data of the target video, and the APM service starts the second player to obtain the live stream data. The second data receiving service may be Pair High Performance Play Module (PHPPM) service. The PHPPM service may start the third player to obtain the video stream data of the target video, and start the fourth player to obtain the live stream data.

Among them, the APM service is used to process the video audio stream data of the video stream data and the live stream data, as well as the first voice stream data of the first terminal. The audio data is processed uniformly through the APM service, which can solve the problem of conflict between the sound of talking in the virtual space (such as a live room) and the sound of the target video, etc.

It should be noted that the HPPM service, APM service and PHPPM service can not only provide the corresponding data receiving service according to the data receiving identity, but also provide play, pause, seek, stop, mute and other audio and video processing functions, and the audiences and guests may choose whether to use the above functions according to the needs of the live broadcast.

In the embodiments of the present disclosure, during the live broadcast process, the first terminal obtains its current data receiving identity, and according to the data receiving identity, starts the data receiving service corresponding to the data receiving identity to obtain the video stream data of the target video, and obtain live stream data.

In the above exemplary embodiment, the data receiving service corresponding to the data receiving identity is started by the current data receiving identity, and different data receiving services are provided for different identities, which can bring to different terminal users, that is, audiences and guests, different drama watching experiences.

In an exemplary embodiment, after starting the data receiving service corresponding to the data receiving identity, the method may further include:
when detecting that the data receiving identity is adjusted from the second data receiving identity to the first data receiving identity, deleting the second data receiving service, and starting the first data receiving service; and
when detecting that the data receiving identity is adjusted from the first data receiving identity to the second data receiving identity, deleting the first data receiving service, and starting the data receiving service.

In some embodiments, if the detected data receiving identity is adjusted from the second data receiving identity to the first data receiving identity, then the data receiving service used when subsequently obtaining the video stream data and live stream data through the data receiving identity is the first data receiving identity corresponding to the first data receiving identity. Therefore, the second data receiving service may be deleted to prevent the second data receiving service from obtaining the video stream data and live stream data, avoid occupying unnecessary operating space, and start the first data receiving service at the same time, to obtain the video stream data and live stream data through the data receiving service subsequently.

If the detected data receiving identity is adjusted from the first data receiving identity to the second data receiving identity, then the data receiving service used when obtaining the video stream data and live stream data subsequently through the data receiving service is the second data receiving service corresponding to the second data receiving identity. Therefore, the first data receiving service may be deleted to prevent the first data receiving service from obtaining the video stream data and live stream data, avoid occupying unnecessary operating space, and start the second data receiving service at the same time, to obtain the video stream data and live stream data through the data receiving service subsequently.

In the above exemplary embodiment, the data receiving identity is detected; if the detected data receiving identity is the first data receiving identity, the second data receiving service is deleted, and the first data receiving service is started; if the detected playing identity is the second data receiving identity, the first data receiving service is deleted, and the second data receiving service is started. This enables subsequent obtaining of video stream data and live stream data according to the characteristics of each data receiving identity, prevents unnecessary data receiving service from obtaining the video stream data and live stream data, and avoids occupying unnecessary operating space.

In an exemplary embodiment, the obtaining the data receiving identity may include:
receiving an identity adjustment instruction;
according to the identity adjustment instruction, obtaining a corresponding data receiving identity; where the data receiving identity corresponds to a data receiving service.

In some embodiments, different data receiving identities may be converted mutually. Before obtaining the data receiving identity, an identity adjustment instruction needs to be obtained, and the data receiving identity is adjusted according to the identity adjustment instruction to determine the latest data receiving identity. For example, while watching a live broadcast, the audience may participate in the interaction by leaving a message, but if the audience wants to interact with the anchor by voice or video and show it to other audiences, the audience may request (for example, through turning on the microphone) to adjust the data receiving identity, then the identity adjustment instruction is generated, after the identity adjustment instruction is passed, the data receiving identity is adjusted, and the data receiving identity is converted from the audience to the guest.

In the foregoing exemplary embodiment, the identity adjustment instruction is obtained, and the data receiving identity is adjusted according to the identity adjustment instruction. The identities between audiences and guests may be converted according to the needs of the live broadcast process, so as to provide a basis for starting the data receiving service corresponding to the data receiving identity subsequently according to the data receiving identity, and realize the on-demand conversion of the data receiving identity.

In an exemplary embodiment, the obtaining the video stream data of the target video, that is, step 210 includes:
obtaining repertoire information of the target video, where the repertoire information indicates the identity information of the target video; and
requesting the video stream data of the target video through the repertoire information.

The repertoire information includes one or more of the following: an identifier of the target video, a title of the target video, and an address link of the target video.

In some embodiments, the first terminal may obtain the repertoire information pushed by the anchor terminal, and display the repertoire information to the user of the first terminal. For example, assuming that the repertoire information includes the title of the target video "Love Go Home", the title of the play may be displayed on the first terminal. If the user of the first terminal wants to join the virtual space opened by the anchor to watch the target video synchronously, he/she may request the video stream data of the target video according to the address link in the repertoire information.

In the above exemplary embodiment, the repertoire information is obtained, it is determined whether to join the virtual space to watch the video together, and the video stream data of the target video may also be requested according to the repertoire information, so that the video stream data of the target video can be played to realize the video sharing in the virtual space.

In an exemplary embodiment,
the requesting the video stream data of the target video through the repertoire information includes:
starting a first player, and obtaining the video stream data of the target video from a server through the first player by using the repertoire information.

The obtaining the live stream data includes:
obtaining the live stream data through a data receiving service corresponding to the data receiving identity.

In the embodiments of the present disclosure, assuming that the data receiving identity of the first terminal is the first data receiving identity, such as a guest, the first data receiving service corresponding to the first data receiving identity, namely the HPPM service and the APM service, may be activated. When obtaining the video stream data of the target video, the first player may be started, and the video stream data of the target video may be obtained from the server through the first player by using the repertoire information, and when the live stream data is obtained, the live stream data may be obtained according to the data receiving service corresponding to the first data receiving identity.

In an exemplary embodiment, the obtaining live stream data through the data receiving identity includes:
starting a second player, and obtaining the live stream data from the second terminal through the second player.

Assuming that the data receiving identity of the first terminal is the first data receiving identity, the first data receiving service corresponding to the first data receiving identity may be started. When the live stream data is obtained, the second player may be started, and according to the second player, the live stream data is obtained from the second terminal.

In the above exemplary embodiment, if the data receiving identity of the first terminal is the first data receiving identity, the first data receiving service corresponding to the first data receiving identity is started, where the live stream data may be obtained directly from the second terminal, and because the first data receiving identity may be a guest who is in voice communication with the anchor by turning on the microphone, the live stream data is obtained from the second terminal (the anchor terminal), which can reduce the data delay between the guest and the anchor and improve the live communication experience.

In an exemplary embodiment,
the requesting the video stream data of the target video through the repertoire information includes:
starting a third player, and obtaining the video stream data of the target video from the server through the third player by using the repertoire information; and
the obtaining the live stream data includes:
   starting a fourth player, and obtaining the live stream data through the fourth player.

In the embodiments of the present disclosure, assuming that the data receiving identity of the first terminal is the second data receiving identity, such as audiences, the second data receiving service corresponding to the second data receiving identity, namely the PHPPM service, may be started. Then, when obtaining the video steam data of the target video, the third player may be started, and the video stream data of the target video may be obtained from the server through the third player by using the repertoire information; and when obtaining the live stream data, the fourth player may be started, and according to the fourth player, the live stream data is obtained. The fourth player obtains the live stream data from the server.

In the above exemplary embodiment, if the data receiving identity of the first terminal is the second data receiving identity, the second data receiving service corresponding to the second data receiving identity is started, where the live stream data and the video stream data are both obtained from the server. The second terminal can reduce the pressure on the second terminal by pushing the live stream data to the server, and then forwarding the live stream data to the first terminal by the server.

In an exemplary embodiment, the video stream data of the target video includes video picture stream data and video audio stream data, and the playing the video stream data of the target video and the live stream data includes:
shielding the video audio stream data and playing the video picture stream data by the first player; and
playing the video audio stream data and the live stream data by the second player.

When playing the video stream data and the live stream data, if the video stream data and the live stream data are obtained through the first data receiving service, the video audio stream data of the video stream data will be shielded, and the video stream data will be played by the first player. In this way, the terminal user may watch the drama, that is, watch the target video, through the first player. In addition, the video audio stream data of the video stream data and the live stream data will also be played through the second player.

In the above exemplary embodiment, after obtaining the video stream data of the target video and the live stream data through the first data receiving service corresponding to the first data receiving identity, only the video picture stream data of the video stream data will be played through the first player, and the video audio stream data of the video stream data and the live stream data are played by the second player. Since the first data receiving identity may be a guest who turns on the microphone for voice communication with the anchor, the first terminal will also obtain the first voice stream data spoken by the guest. By uniformly processing the audio data including the first voice stream data through the second player, the data processing efficiency can be improved.

In an exemplary embodiment, the playing the video stream data of the target video and the live stream data includes:
playing the video stream data of the target video through the third player; and
playing the live stream data through the fourth player.

When playing the video stream data and the live stream data, if the video stream data and the live stream data are obtained through the second data receiving service, the video stream data will be played by the third player, so that the terminal user can watch drama and listen to the drama through the first player, that is, watch the target video. In addition, the live stream data will be played through the fourth player.

In the above exemplary embodiment, after the video stream data of the target video and the live stream data are obtained through the second data receiving service corresponding to the second data receiving identity, the video stream data will be played through the third player, and the live stream data will be played through the fourth player. By using different players to process the data, the data can be played in an orderly manner.

In an exemplary embodiment, the method further includes:
obtaining the first voice stream data; and
providing the first voice stream data to the second terminal and other terminal(s), where other terminal(s) is a terminal in the same virtual space as the first terminal.

The user of the first terminal may be a guest after turning on the microphone, and the guest may have a voice communication with the anchor of the second terminal. Here, the voice of the guest may be collected through the second terminal to obtain the first voice stream data, and then the first voice stream data may be provided to the second terminal and other terminal(s) in the same virtual space, so as to realize the voice communication among the anchor, the audiences and the guests in the virtual space. Among them, other terminal(s) may also serve as the first terminal, that is, a plurality of first terminals may be included in the same virtual space, i.e., a plurality of audience terminals and a plurality of guest terminals may be included.

In an exemplary embodiment, the first voice stream data includes an echo signal generated by diffusing the video audio stream data of the video stream data of the target video, and providing the first voice stream data to the second terminal and other terminal(s) include:
performing an echo cancellation processing on the first voice stream data by using the video audio stream data of the target video as a reference signal, to obtain the first voice stream data after the echo signal is eliminated; and
providing the first voice stream data after the echo signal is eliminated to the second terminal and the other terminal(s).

When the first terminal obtains the first voice stream data through the microphone, because it is in the process of simultaneously watching the target video, it often appears that the sound of the target video being played is picked up by the microphone of the first terminal after it travels through multiple paths, and returns to form an echo phenomenon. If the echo is not processed, it will affect the quality of voice communication and user experience. In severe cases, it will also cause shock and howling. In order to avoid the adverse effects of echo, the embodiments of the present disclosure adopt Acoustic Echo Cancellation (AEC) to eliminate the video audio stream data of the target video played by the speaker from the first voice stream data collected by the microphone, so that the voice collected by the microphone is only the voice of the user speaking.

The video audio stream data of the target video is the original signal that has not been played by the speaker at the anchor end, and the first voice stream data collected by the microphone includes the echo signal generated after the video audio stream data played by the speaker is diffused. In the embodiment of the present disclosure, the video audio stream data may be used as the reference signal to perform echo cancellation processing on the first voice stream data, so as to obtain the first voice stream data after the echo signal is eliminated. In this way, the obtained first voice stream data does not have an echo signal, which can improve the quality of voice communication.

In an exemplary embodiment, a play volume of the video audio stream data is less than a play volume of the live stream data.

When the first terminal plays the video stream data of the target video and the live stream data, the play volume of the video audio stream data of the video stream data is adjusted to be less than the play volume of the live stream data, so that the sound of the target video is primary and the voice of speech is secondary, which improves the experience of voice communication during live broadcast.

In the embodiments of the present disclosure, the video stream data and the live stream data are respectively obtained and played according to the data receiving service corresponding to the data receiving identity of the first terminal, so that the video stream data and the live stream data are played smoothly, the multi-party noise during playing is reduced, and the experience of watching a drama is improved.

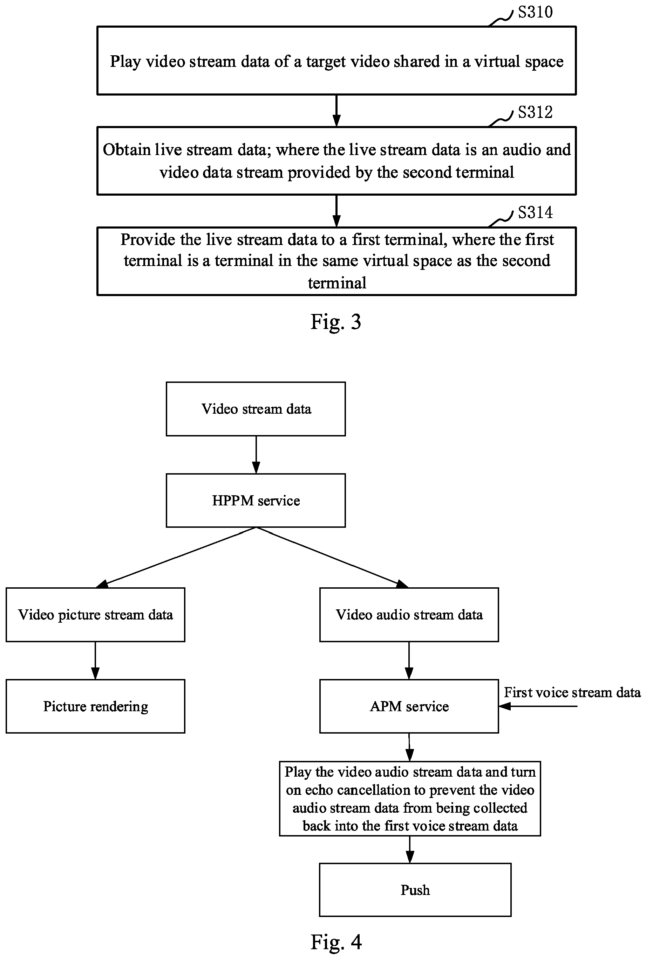

Fig. 3 is a flow chart showing a method for playing data according to an exemplary embodiment. As shown in Fig. 2, the data synchronization method being applied in the second terminal 120 in Fig. 3 is taken as an example for description, the method is applied to the second terminal, and includes the following steps.

In step 310, video stream data of a target video shared in a virtual space is played.

In step 312, live stream data is obtained; where the live stream data is an audio and video data stream provided by a second terminal.

In step 314, the live stream data is provided to a first terminal, where the first terminal is a terminal in the same virtual space as the second terminal.

The second terminal may be an anchor terminal of an anchor, and the anchor may open (create) the virtual space and play the target video shared in the virtual space through the anchor terminal. In the process of playing the target video, the anchor may use the camera and microphone to collect the anchor video stream data of the anchor action and the second voice stream data of the anchor speaking. The anchor video stream data and the second voice stream data will be combined into the audio and video data stream, and provided to the first terminal in the virtual space as the live stream data.

In some embodiments, in order to reduce the overhead of the second terminal, the live stream data may only collect the second voice stream data, and only the second voice stream data is provided as the live stream data to the first terminal in the virtual space.

In the above method for playing data, the live stream data may be obtained and provided to the first terminal during the process of playing the target video in the virtual space, so that the user(s) of the first terminal(s) in the virtual space can realize the drama watching and live broadcast communication, which improves the user experience.

In an exemplary embodiment, before obtaining the live stream data, the method further includes:
opening the virtual space, and determining the target video shared in the virtual space;
obtaining repertoire information of the target video, where the repertoire information indicates identity information of the target video; and
providing the repertoire information of the target video to the first terminal.

After opening the virtual space, the target video shared in the virtual space may be determined by selecting from the existing episodes on the live broadcast platform. After determining the target video, the repertoire information of the target video may be obtained. The repertoire information includes one or more of the following: an identifier of the target video, a title of the target video, and an address link of the target video. Then the repertoire information is provided to the first terminal. The repertoire information may be uniformly pushed by the server.

In an exemplary embodiment, the video stream data of the target video includes video picture stream data and video audio stream data, and the playing the video stream data of the target video shared in the virtual space includes:
starting a fifth player, obtaining the video stream data of the target video from the server using the repertoire information, shielding the video audio stream data of the video stream data, and playing the video picture stream data of the video stream data, through the fifth player; and
starting a sixth player, and playing the video audio stream data of the video stream data through the sixth player.

In an embodiment of the present disclosure, the second terminal may use HPPM service and APM service. In some embodiments, the fifth player of the HPPM service may be started. After the video stream data of the target video is obtained from the server by using the repertoire information through the fifth player, the video audio stream data of the video stream data may be shielded and the video picture stream data of the video stream data may be played, and the sixth player of the APM server is started, and the video audio stream data of the video stream data is played through the sixth player.

In an exemplary embodiment, the live stream data includes second voice stream data, and the second voice stream data includes an echo signal generated by diffusion of the played video audio stream data of the video stream data. The providing the live stream data to the first terminal includes:
using the video audio stream data as a reference signal by the sixth player to perform echo cancellation processing on the second voice stream data to obtain the second voice stream data after the echo signal is eliminated;
providing the second voice stream data after the echo signal is eliminated to the first terminal as the live stream data.

Since the anchor needs to conduct live communication with the guest, the second terminal will also obtain the second voice stream data of the anchor speaking, and provide the live stream data including the second voice stream data to the first terminal.

When the second terminal obtains the second voice stream data through the microphone, because it is in the process of simultaneously watching the target video, it often appears that the sound of the target video being played is picked up by the microphone of the second terminal after it travels through multiple paths, and is returned back to form an echo phenomenon. Therefore, the embodiment of the present disclosure will perform echo cancellation processing on the second voice stream data. The video audio stream data of the target video is the original signal that has not been played by the speaker on the anchor side, and the second voice stream data collected by the microphone includes the echo signal generated after the video audio stream data played by the speaker is diffused. In the embodiment of the present disclosure, the echo cancellation processing may be performed on the second voice stream data by using the video audio stream data as a reference signal, to obtain the second voice stream data after the echo signal is eliminated. In this way, the obtained second voice stream data does not have an echo signal, which can improve the quality of voice communication.

In the embodiment of the present disclosure, the audio data including the second voice stream data is processed in a unified manner by the sixth player, which can improve the data processing efficiency.

In an exemplary embodiment, the method further includes:
receiving and playing the first voice stream data provided by the first terminal through the sixth player.

The sixth player may also receive the first voice stream data provided by the first terminal, and the sixth player may play the first voice stream data. In order to prioritize the voice of the speech and the sound of the target video, when the first voice stream data is played, the play volume of the first voice stream data may be adjusted to be higher than the play volume of the target video.

In an exemplary embodiment, the providing the live stream data to the first terminal includes:
merging the first voice stream data into the live stream data, and providing the live stream data after merging the first voice stream data to the first terminal.

In some embodiments, the embodiments of the present disclosure may also merge the first voice stream data into the live stream data, and provide the live stream data into which the first voice stream data is merged to the first terminal. In this way, the first terminal can receive voice stream data from all users in the virtual space, which can improve user communication experience.

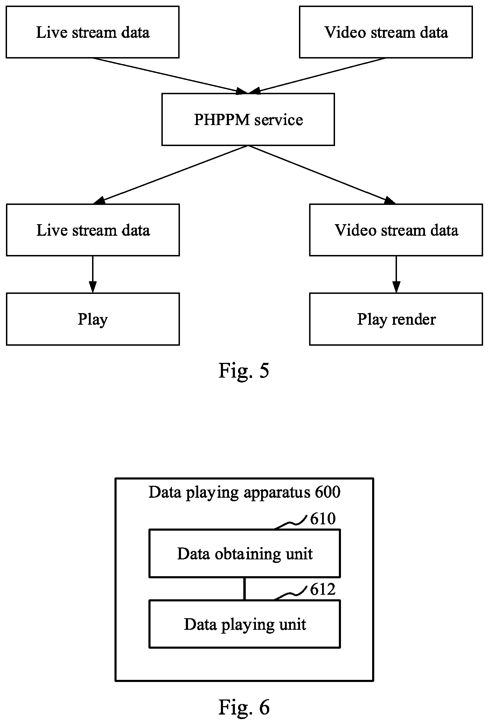

In order to enable those skilled in the art to have an in-depth understanding of the embodiments of the present disclosure, the following uses examples to illustrate the process of implementing data playing in the embodiments of the present disclosure, where the process includes:
1. The anchor terminal opens the live broadcast room.
2. The anchor terminal selects the target video to be played in the live broadcast room and provides live stream data.
3. After determining the target video, the guest terminal starts the HPPM service and the APM service. The HPPM service is started, and the video stream data of the target video is obtained through the player corresponding to the HPPM service, the APM service is started, and the live stream data is obtained through the player corresponding to the APM service, where the player corresponding to the HPPM service shields the video audio stream data of the video stream data, and then plays based on the video picture data of the video stream data, and the player corresponding to the APM service will obtain the first voice stream data of the guest speaking, and the video audio stream data of the video stream data is played on the player corresponding to the APM service, and after collecting the first voice stream data, echo cancellation processing is performed on the first voice stream data based on the video audio stream data, and the first voice stream data after echo cancellation processing is pushed to the terminal(s) in the virtual space, as shown in Fig. 4.
4. The audience terminal starts the PHPPM service. The PHPPM service corresponds to two players. One player obtains and plays the video stream data of the target video, and the other player obtains and plays the live stream data. The player of the PHPPM service may also only obtain and play the voice stream data of the live stream data, which reduces the overhead of the terminal, as shown in Fig. 5.
6. When the audience terminal turns on the microphone, it will act as a guest terminal. At this time, the PHPPM service will be destroyed, and the HPPM service and APM service will be started. When the guest turns off the microphone, the HPPM service and APM service will be destroyed and the PHPPM service will be started.

In the embodiment of the present disclosure, the terminals in the live broadcast room can watch the drama together and listen to the voice stream data of the anchor and the guest(s), and the embodiment of the present disclosure can realize the centralized processing of the audio data by starting the APM service, so that the audio data can be refined, and the voice communication experience is improved.

It should be understood that although the various steps in the flowcharts of Figs. 2-3 are displayed in sequence as indicated by the arrows, these steps are not necessarily executed in sequence in the order indicated by the arrows. Unless there is a clear description in the present disclosure, there is no strict order for the execution of these steps, and these steps may be executed in other orders. Moreover, at least part of the steps in Figs. 2-3 may include a plurality of steps or a plurality of stages. These steps or stages are not necessarily executed at the same time, but may be executed at different times. The execution sequence of these steps or stages is not necessarily performed sequentially, but may be performed in turn or alternately with other steps or at least a part of the steps or stages in other steps.

Fig. 6 is a block diagram showing an apparatus for playing data according to an exemplary embodiment. Referring to Fig. 6, the apparatus for playing data 600 includes:
a data obtaining unit 610, configured to obtain video stream data of a target video according to a data receiving service corresponding to a data receiving identity; and, to obtain live stream data; where the data receiving identity is used for the identity of the first terminal to receive data, the live stream data is an audio and video data stream provided by a second terminal, and the second terminal is a terminal in the same virtual space as the first terminal; and
a data playing unit 612, configured to play the video stream data of the target video and the live stream data.

In an exemplary embodiment, the apparatus further includes:
an identity obtaining unit, configured to obtain the data receiving identity; and
a service activation unit, configured to activate the data receiving service corresponding to the data receiving identity.

In an exemplary embodiment, the data obtaining unit 610 is configured to obtain repertoire information of the target video, where the repertoire information indicates the identity information of the target video; and request the video stream data of the target video through the repertoire information.

In an exemplary embodiment, the repertoire information includes one or more of the following: an identifier of the target video, a title of the target video, and an address link of the target video.

In an exemplary embodiment, the data obtaining unit 610 is configured to start a first player, and obtain the video stream data of the target video from the server through the first player by using the repertoire information; and obtain the live stream data through the data receiving service corresponding to the data receiving identity.

In an exemplary embodiment, the data obtaining unit 610 is configured to start a second player, and obtain the live stream data from the second terminal through the second player.

In an exemplary embodiment, the data obtaining unit 610 is configured to start a third player, and obtain the video stream data of the target video from the server through the third player by using the repertoire information; and start the fourth player, and obtain the live stream data through the fourth player.

In an exemplary embodiment, the data playing unit 612 is configured to shield the video audio stream data and play the video picture stream data through the first player; and play the video audio stream data and the live stream data through the second player.

In an exemplary embodiment, the data playing unit 612 is configured to play the video stream data of the target video through the third player; and play the live stream data through the fourth player.

In an exemplary embodiment, the apparatus further includes:
a first voice stream data obtaining unit, configured to obtain first voice stream data;
a first voice stream data providing unit, configured to provide the first voice stream data to the second terminal and other terminal(s), and the other terminal(s) is a terminal in the same virtual space as the first terminal.

In an exemplary embodiment, the first voice stream data includes an echo signal generated by diffusion of playing the video audio stream data of the video stream data of the target video, and the first voice stream data providing unit is configured to perform echo cancellation processing on the first voice stream data using the video audio stream data of the target video as a reference signal, to obtain the first voice stream data after the echo signal is eliminated; and provide the first voice stream data after the echo signal is eliminated to the second terminal and the other terminal(s).

In an exemplary embodiment, the identity obtaining unit is configured to receive an identity adjustment instruction; and obtain a corresponding data receiving identity according to the identity adjustment instruction; where the data receiving identity corresponds to a data receiving service.

In an exemplary embodiment, the data receiving identity includes a first data receiving identity and a second data receiving identity; the data receiving service includes a first data receiving service and a second data receiving service; the first data receiving identity corresponds to the first data receiving service, and the second data receiving identity corresponds to the second data receiving service.

In an exemplary embodiment, the apparatus further includes:
a first adjustment unit, configured to, based on the detection that the data receiving identity is adjusted from the second data receiving identity to the first data receiving identity, delete the second data receiving service, and start the first data receiving service; and
a second adjustment unit, configured to, based on the detection that the data receiving identity is adjusted from the first data receiving identity to the second data receiving identity, delete the first data receiving service, and start the data receiving service .

In an exemplary embodiment, the play volume of the video audio stream data is less than the play volume of the live stream data.

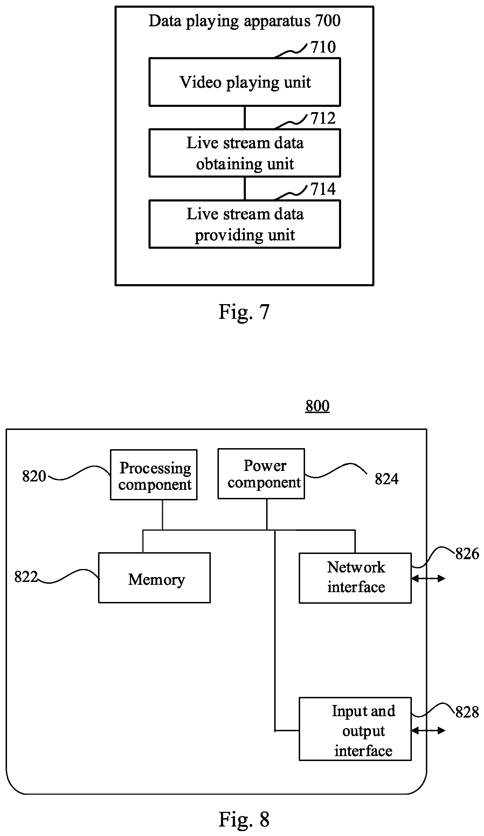

Fig. 7 is a block diagram showing an apparatus for playing data according to an exemplary embodiment. Referring to Fig. 7, the apparatus for playing data 700 includes:
a video playing unit 710, configured to play video stream data of a target video shared in a virtual space;
a live stream data obtaining unit 712, configured to obtain live stream data; where the live stream data is an audio and video data stream provided by the second terminal; and
a live stream data providing unit 714, configured to provide the live stream data to a first terminal, where the first terminal is a terminal in the same virtual space as the second terminal.

In an exemplary embodiment, the apparatus further includes:
a virtual space opening unit, configured to open the virtual space and determine the target video shared in the virtual space;
a repertoire information obtaining unit, configured to obtain repertoire information of the target video, where the repertoire information indicates the identity information of the target video; and
a repertoire information providing unit, configured to provide the repertoire information of the target video to the first terminal.

In an exemplary embodiment, the video stream data of the target video includes video picture stream data and video audio stream data, and the video playing unit 710 is configured to start a fifth player, obtain the video stream data of the target video from the server by using the repertoire information, shield the video audio stream data of the video stream data, and play the video picture stream data of the video stream data, through the fifth player; and start a sixth player, and play the video audio stream data of the video stream data through the sixth player.

In an exemplary embodiment, the live stream data includes second voice stream data, and the second voice stream data includes an echo signal generated by diffusion of playing the video audio stream data of the video stream data, and the live stream data providing unit 714 is configured to perform echo cancellation processing on the second voice stream data by the sixth player using the video audio stream data as a reference signal to obtain the first echo signal after the echo signal is eliminated; and provide the second voice stream data after the echo signal is eliminated as live stream data to the first terminal.

In an exemplary embodiment, the apparatus further includes:
a first voice stream data playing unit, configured to receive and play the first voice stream data provided by the first terminal through the sixth player.

In an exemplary embodiment, the live stream data providing unit 714 is configured to merge the first voice stream data into the live stream data, and provide the live stream data into which the first voice stream data is merged to the first terminal.

Regarding the apparatuses in the above-mentioned embodiments, the implementation of the operation performed by each module therein has been described in detail in the embodiments related to the method, and detailed description will not be given here.

Fig. 8 is a block diagram of a device 800 for data playing according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, Operater network (such as 2G, 3G, 4G, or 5G), or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A method for playing data, applied to a first terminal, the method comprising:
obtaining video stream data of a target video according to a data receiving service corresponding to a data receiving identity; and obtaining live stream data; wherein the data receiving identity is an identity for the first terminal to receive data, the live stream data is an audio and video data stream provided by a second terminal, and the second terminal is a terminal in a same virtual space as the first terminal; and
playing the video stream data of the target video and the live stream data.

2. The method for playing data according to claim 1, further comprising:
obtaining the data receiving identity; and
starting the data receiving service corresponding to the data receiving identity.

3. The method for playing data according to claim 2, wherein said obtaining the video stream data of the target video comprises:
obtaining repertoire information of the target video, wherein the repertoire information indicates identity information of the target video; and
requesting the video stream data of the target video through the repertoire information.

4. The method for playing data according to claim 3, wherein the repertoire information comprises one or more of the following: an identifier of the target video, a play name of the target video, and an address link of the target video.

5. The method for playing data according to claim 3, wherein:
said requesting the video stream data of the target video through the repertoire information comprises:
starting a first player, and obtaining the video stream data of the target video from a server through the first player by using the repertoire information; and
said obtaining the live stream data comprises:
obtaining the live stream data through the data receiving service corresponding to the data receiving identity.

6. The method for playing data according to claim 5, wherein said obtaining the live stream data through the data receiving identity comprises:
starting a second player, and obtaining the live stream data from the second terminal through the second player.

7. The method for playing data according to claim 3, wherein:
said requesting the video stream data of the target video through the repertoire information comprises:
starting a third player, and obtaining the video stream data of the target video from a server through the third player by using the repertoire information; and
said obtaining the live stream data comprises:
starting a fourth player, and obtaining the live stream data through the fourth player.

8. The method for playing data according to claim 6, wherein the video stream data of the target video comprises video picture stream data and video audio stream data, and said playing the video stream data of the target video and the live stream data comprises:
shielding the video audio stream data and playing the video picture stream data through the first player; and
playing the video audio stream data and the live stream data through the second player.

9. The method for playing data according to claim 7, wherein said playing the video stream data of the target video and the live stream data comprises:
playing the video stream data of the target video through the third player; and
playing the live stream data through the fourth player.

10. The method for playing data according to claim 1, wherein the method further comprises:
obtaining first voice stream data; and
providing the first voice stream data to the second terminal and other terminal, wherein said other terminal is a terminal in a same virtual space as the first terminal.

11. The method for playing data according to claim 10, wherein the first voice stream data comprises an echo signal generated by diffusion of played video audio stream data of the video stream data of the target video, and said providing the first voice stream data to the second terminal and other terminal comprises:
performing an echo cancellation processing on the first voice stream data by using the video audio stream data of the target video as a reference signal to obtain the first voice stream data after the echo signal is eliminated; and
providing the first voice stream data after the echo signal is eliminated to the second terminal and other terminal.

12. The method for playing data according to claim 2, wherein said obtaining the data receiving identity comprises:
receiving an identity adjustment instruction; and
obtaining a corresponding data receiving identity according to the identity adjustment instruction; wherein the data receiving identity corresponds to a data receiving service.

13. The method for playing data according to claim 3, wherein the data receiving identity comprises a first data receiving identity and a second data receiving identity; the data receiving service comprises a first data receiving service and a second data receiving service; the first data receiving identity corresponds to the first data receiving service, and the second data receiving identity corresponds to the second data receiving service.

14. The data transmission method according to claim 13, wherein after starting the data receiving service corresponding to the data receiving identity, the method further comprises:
when detecting that the data receiving identity is adjusted from the second data receiving identity to the first data receiving identity, deleting the second data receiving service, and starting the first data receiving service; and
when detecting that the data receiving identity is adjusted from the first data receiving identity to the second data receiving identity, deleting the first data receiving service, and starting the data receiving service.

15. The method for playing data according to claim 8, wherein a play volume of the video audio stream data is less than a play volume of the live stream data.

16. A method for playing data, applied to a second terminal, the method comprising:
playing video stream data of a target video shared in a virtual space;
obtaining live stream data; wherein the live stream data is an audio and video data stream provided by the second terminal; and
providing the live stream data to a first terminal, wherein the first terminal is a terminal in a same virtual space as the second terminal.

17. The method for playing data according to claim 16, further comprising:
opening the virtual space, and determining the target video shared in the virtual space;
obtaining repertoire information of the target video, wherein the repertoire information indicates identity information of the target video; and
providing the repertoire information of the target video to the first terminal.

18. The method for playing data according to claim 17, wherein the video stream data of the target video comprises video picture stream data and video audio stream data, and said playing the video stream data of the target video shared in the virtual space comprises:
starting a fifth player, obtaining the video stream data of the target video from a server by using the repertoire information, shielding the video audio stream data of the video stream data, and playing the video picture stream data of the video stream data, through the fifth player; and
starting a sixth player, and playing the video audio stream data of the video stream data through the sixth player.

19. The method for playing data according to claim 18, wherein the live stream data comprises second voice stream data, and the second voice stream data comprises an echo signal generated by diffusion of the played video audio stream data of the video stream data, and said providing the live stream data to the first terminal comprises:
performing an echo cancellation processing on the second voice stream data through the sixth player by using the video audio stream data as a reference signal to obtain the second voice stream data after the echo signal is eliminated; and
providing the second voice stream data after the echo signal is eliminated to the first terminal as the live stream data.

20. The method for playing data according to claim 18, wherein the method further comprises:
receiving and playing first voice stream data provided by the first terminal through the sixth player.

21. The method for playing data according to claim 20, wherein said providing the live stream data to the first terminal comprises:
merging the first voice stream data into the live stream data, and providing the live stream data after merging the first voice stream data to the first terminal.

22. An apparatus for playing data, applied to a first terminal, the apparatus for playing data comprising:
a data obtaining unit, configured to obtain video stream data of a target video according to a data receiving service corresponding to a data receiving identity; and obtain live stream data; wherein the data receiving identity is an identity for the first terminal to receive data, the live stream data is an audio and video data stream provided by a second terminal, and the second terminal is a terminal in a same virtual space as the first terminal; and
a data playing unit, configured to play the video stream data of the target video and the live stream data.

23. The apparatus for playing data according to claim 22, further comprising:
an identity obtaining unit, configured to obtain the data receiving identity; and
a service starting unit, configured to start the data receiving service corresponding to the data receiving identity.

24. The apparatus for playing data according to claim 23, wherein the data obtaining unit is configured to obtain repertoire information of the target video, wherein the repertoire information indicates identity information of the target video; and request the video stream data of the target video through the repertoire information.

25. The apparatus for playing data according to claim 24, wherein the repertoire information comprises one or more of the following: an identifier of the target video, a play name of the target video, and an address link of the target video.

26. The apparatus for playing data according to claim 24, wherein the data obtaining unit is configured to start a first player, and obtain the video stream data of the target video from a server through the first player by using the repertoire information; and obtain the live stream data through the data receiving service corresponding to the data receiving identity.

27. The apparatus for playing data according to claim 26, wherein the data obtaining unit is configured to start a second player, and obtain the live stream data from the second terminal through the second player.

28. The apparatus for playing data according to claim 24, wherein the data obtaining unit is configured to start a third player, and obtain the video stream data of the target video from a server through the third player by using the repertoire information; and start a fourth player, and obtain the live stream data through the fourth player.

29. The apparatus for playing data according to claim 27, wherein the data playing unit is configured to shield the video audio stream data and play the video picture stream data through the first player; and play the video audio stream data and the live stream data through the second player.

30. The apparatus for playing data according to claim 28, wherein the data playing unit is configured to play the video stream data of the target video through the third player; and play the live stream data through the fourth player.

31. The apparatus for playing data according to claim 22, wherein the apparatus further comprises:
a first voice stream data obtaining unit, configured to obtain first voice stream data; and
a first voice stream data providing unit, configured to provide the first voice stream data to the second terminal and other terminal, wherein said other terminal is a terminal in a same virtual space as the first terminal.

32. The apparatus for playing data according to claim 31, wherein the first voice stream data comprises an echo signal generated by diffusion of played video audio stream data of the video stream data of the target video, and the first voice stream data providing unit is configured to perform an echo cancellation processing on the first voice stream data by using the video audio stream data of the target video as a reference signal to obtain the first voice stream data after the echo signal is eliminated; and provide the first voice stream data after the echo signal is eliminated to the second terminal and other terminal.

33. The apparatus for playing data according to claim 23, wherein the identity obtaining unit is configured to receive an identity adjustment instruction; and obtain a corresponding data receiving identity according to the identity adjustment instruction; wherein the data receiving identity corresponds to a data receiving service.

34. The apparatus for playing data according to claim 3, wherein the data receiving identity comprises a first data receiving identity and a second data receiving identity; the data receiving service comprises a first data receiving service and a second data receiving service; the first data receiving identity corresponds to the first data receiving service, and the second data receiving identity corresponds to the second data receiving service.

35. The data transmission apparatus according to claim 34, further comprising:
a first adjustment unit, configured to, when detecting that the data receiving identity is adjusted from the second data receiving identity to the first data receiving identity, delete the second data receiving service, and start the first data receiving service; and
a second adjustment unit, configured to, when detecting that the data receiving identity is adjusted from the first data receiving identity to the second data receiving identity, delete the first data receiving service, and start the data receiving service.

36. The apparatus for playing data according to claim 29 or 30, wherein a play volume of the video audio stream data is less than a play volume of the live stream data.

37. An apparatus for playing data, applied to a second terminal, the apparatus for playing data comprising:
a video playing unit, configured to play video stream data of a target video shared in a virtual space;
a live stream data obtaining unit, configured to obtain live stream data; wherein the live stream data is an audio and video data stream provided by the second terminal; and
a live stream data providing unit, configured to provide the live stream data to a first terminal, wherein the first terminal is a terminal in a same virtual space as the second terminal.

38. The apparatus for playing data according to claim 37, wherein the apparatus further comprises:
a virtual space opening unit, configured to open the virtual space and determine the target video shared in the virtual space;
a repertoire information obtaining unit, configured to obtain repertoire information of the target video, wherein the repertoire information indicates identity information of the target video; and
a repertoire information providing unit, configured to provide the repertoire information of the target video to the first terminal.

39. The apparatus for playing data according to claim 37, wherein the video stream data of the target video comprises video picture stream data and video audio stream data, and the video playing unit is configured to start a fifth player, obtain the video stream data of the target video from a server by using the repertoire information, shield the video audio stream data of the video stream data, and play the video picture stream data of the video stream data, through the fifth player; and start a sixth player, and play the video audio stream data of the video stream data through the sixth player.

40. The apparatus for playing data according to claim 39, wherein the live stream data comprises second voice stream data, and the second voice stream data comprises an echo signal generated by diffusion of played video audio stream data of the video stream data, and the live stream data providing unit is configured to perform an echo cancellation processing on the second voice stream data through the sixth player by using the video audio stream data as a reference signal to obtain the second voice stream data after the echo signal is eliminated; and provide the second voice stream data after the echo signal is eliminated to the first terminal as live stream data.

41. The apparatus for playing data according to claim 39, wherein the apparatus further comprises:
a first voice stream data playing unit, configured to receive and play first voice stream data provided by the first terminal through the sixth player.

42. The apparatus for playing data according to claim 41, wherein the live stream data providing unit is configured to merge the first voice stream data into the live stream data, and provide the live stream data after merging the first voice stream data to the first terminal.

43. An electronic device, comprising:
a processor; and
a memory for storing instructions executable by the processor;
wherein the processor is configured to execute the instructions to implement following steps:
obtaining video stream data of a target video according to a data receiving service corresponding to a data receiving identity; and obtaining live stream data; wherein the data receiving identity is an identity for the first terminal to receive data, the live stream data is an audio and video data stream provided by a second terminal, and the second terminal is a terminal in a same virtual space as the first terminal; and
playing the video stream data of the target video and the live stream data.

44. An electronic device, comprising:
a processor; and
a memory for storing instructions executable by the processor;
wherein the processor is configured to execute the instructions to implement following steps:
playing video stream data of a target video shared in a virtual space;
obtaining live stream data; wherein the live stream data is an audio and video data stream provided by the second terminal; and
providing the live stream data to a first terminal, wherein the first terminal is a terminal in a same virtual space as the second terminal.

45. A storage medium, when instructions in the storage medium are executed by a processor of an electronic device, the electronic device is enabled to execute following steps:
obtaining video stream data of a target video according to a data receiving service corresponding to a data receiving identity; and obtaining live stream data; wherein the data receiving identity is an identity for the first terminal to receive data, the live stream data is an audio and video data stream provided by a second terminal, and the second terminal is a terminal in a same virtual space as the first terminal; and
playing the video stream data of the target video and the live stream data.

46. A storage medium, when instructions in the storage medium are executed by a processor of an electronic device, the electronic device is enabled to execute following steps:
playing video stream data of a target video shared in a virtual space;
obtaining live stream data; wherein the live stream data is an audio and video data stream provided by the second terminal; and
providing the live stream data to a first terminal, wherein the first terminal is a terminal in a same virtual space as the second terminal.
